## Europäisches Patentamt
## European Patent Office
## Office européen des brevets

(11) Publication number: **0 020 101**
A1

# EUROPEAN PATENT APPLICATION

(21) Application number: **80301707.8**

(22) Date of filing: **22.05.80**

(51) Int. Cl.³: **B 01 D 33/04**, B 01 D 29/02

(30) Priority: **25.05.79 ZA 792577**
**07.03.80 ZA 801360**

(43) Date of publication of application: **10.12.80**
**Bulletin 80/25**

(84) Designated Contracting States: **AT BE CH DE FR GB IT LI LU NL SE**

(71) Applicant: **BATEMAN EQUIPMENT LIMITED, Founders Building, Bartlett Road, Boksburg North Transvaal (ZA)**

(72) Inventor: **Shears, Barry Edward Graham, Seven Acres, Clymping, Littlehampton Sussex (GB)**

(74) Representative: **Needle, Jacqueline et al, Page, White & Farrer 27 Chancery Lane, London WC2A 1NT (GB)**

(54) **Vacuum belt filter including vacuum sealing means.**

(57) A vacuum belt filter including an endless conveyor belt (1) which includes apertures (8) therethrough over at least a major portion of its surface area; filter cloth (9) adapted to be located round the conveyor belt (1); a vacuum chamber (16) located below the operative run (33a) of the conveyor belt (1) and including an inlet (15) extending along at least part of the operative run (33a) of the conveyor belt (1); and vacuum sealing means between the conveyor belt (1) and the vacuum chamber (16), the vacuum sealing means including a sealing roller (24, 24a) which is located transversely to the direction of travel of the conveyor belt (1) towards an end of the inlet (15) into the vacuum chamber (16) in a position below the conveyor belt (1), at least the outer peripheral portion (26) of the sealing roller (24, 24a) comprising resilient material, the periphery (26a) of the sealing roller (24, 24a) being in sealing contact with the conveyer belt (1) and with a transversely disposed end face (16b) on the vacuum chamber (16) and opposite ends of the resilient outer portion (26) of the sealing roller (24, 24a) being in sealing contact with opposed longitudinally disposed side faces (16a) on the vacuum chamber (16).

- 1 -

## VACUUM BELT FILTERS

This invention relates to belt filters and more particularly to vacuum belt filters

Continuous vacuum belt filters are well known for the separation of liquids from slurries and other solids-liquid mixtures. Normally, such a vacuum belt filter comprises an endless conveyor belt of rubber or like material which is adapted to be continuously driven along a closed path including an operative filtering run and a return run. A separate endless filter belt of suitable filter material is located round the conveyor belt. Along its operative run the conveyor belt carries the

- 2 -

filter belt on its upper outer face and its opposite lower inner face is located in intimate sliding contact with bearing surfaces round a centrally located, elongate inlet into a vacuum chamber which extends in the direction of travel of the conveyor belt. The filter belt separates from the conveyor belt along the return run.

A series of filtrate conveying grooves extending transversely to the direction of travel of the conveyor belt are normally provided in substantially parallel spaced relationship to each other in the outer face of the conveyor belt along the entire length of the latter. An aperture extends through the conveyor belt from the bottom of each groove in a central zone of the groove thereby to provide a longitudinally extending row of spaced filtrate drainage apertures through the conveyor belt. Along the operative run of the conveyor belt the filter belt rests on ridges defined between the filtrate conveying grooves and the centrally located apertures register with the elongate inlet of the vacuum chamber to place the grooves in communication with the vacuum chamber.

In use, the lower inner face of the conveyor belt along the operative run slides in sealing relationship over the bearing surfaces round the inlet into the vacuum chamber and a slurry or other solids-liquid feed material is located on the filter belt along the operative run. A suction effect is transmitted to the slurry through the apertures and the grooves in the conveyor belt and through the filter cloth from a vacuum pump connected to the vacuum chamber. Filtrate is drawn from the slurry through the filter cloth, along the transverse grooves in the belt, through the row of apertures in the conveyor belt and into the vacuum chamber for withdrawal by the vacuum pump. The filter belt separates from the conveyor belt along its return run in order to facilitate effective cleaning.

Vacuum sealing between the conveyor belt and the vacuum chamber is achieved by the sliding contact between the inner face of the conveyor belt and the bearing surfaces round the inlet into the vacuum

- 4 -

chamber.

With a vacuum belt filter as described above, problems of hydraulic capacity are normally experienced to obtain a free flow of filtrate along the transverse grooves and the row of drainage apertures in the conveyor belt.

It is an object of the present invention to provide an improved vacuum belt filter embodying novel vacuum sealing means, with which the above problems are avoided or at least minimised.

According to the invention a vacuum belt filter includes an endless conveyor belt which includes apertures therethrough over at least a major portion of its surface area and which is movable along a closed path including an operative run and a return run; filter cloth adapted to be located on the outer surface of the conveyor belt at least along the operative run of the conveyor belt; a vacuum chamber below the operative run of the conveyor belt and including an inlet extending along at least part of the operative run of the conveyor belt, apertures through the conveyor belt which pass along the vacuum chamber during operation being located in registration with the inlet; and vacuum sealing means between the conveyor belt and the vacuum chamber, the vacuum sealing means including a sealing roller which is located transversely to the direction of travel of the conveyor belt towards an end of the inlet into the vacuum chamber in a position below the conveyor belt, at least the outer peripheral portion of the sealing roller comprising resilient material, the periphery of the sealing roller being in sealing contact with the conveyer belt and with a transversely disposed end face on the vacuum chamber and opposite ends of the resilient outer portion of the roller being in sealing contact with opposed longitudinally disposed side faces on the vacuum chamber.

With a conveyor belt including apertures over at least a major portion of its surface area as defined in the preceding paragraph, filtrate may pass directly from the filter cloth through apertures in

- 6 -

the conveyor belt along its operative run, thereby reducing hydraulic resistance to a minimum and avoiding or at least minimising the problems of hydraulic capacity experienced with conventional filters.

However, since the apertures through the conveyor belt are distributed over at least a major portion of the surface area of the conveyor belt, conventional vacuum sealing arrangements are not satisfactory and according to the invention the vacuum sealing means includes a sealing roller as defined above.

The transversely disposed end face and the longitudinally disposed side faces on the vacuum chamber may be located on or presented by the walls of the vacuum chamber itself and/or the surrounds of the inlet into the vacuum chamber.

The sealing roller may comprise a rigid internal portion having a length less than the distance between the opposed side faces on the vacuum chamber; and an outer sleeve of resilient material embracing the rigid internal portion and having a length greater than the distance between the opposed side faces, the resilient outer sleeve being located in longitudinally compressed condition between the opposed side faces and also in peripheral contact with the conveyor belt and with the transverse end face on the vacuum chamber or its inlet.

The transverse sealing roller may be located towards the start of the operative run of the conveyor belt. In order to improve the sealing effect a pinch roller may be located transversely to the direction of travel of the conveyor belt in a position above the conveyor belt and the filter cloth thereon, the pinch roller acting to urge the conveyor belt into engagement with the resilient periphery of the sealing roller.

The pinch roller may be similar in construction to the sealing roller.

In order to enhance the sealing effect further, the

- 8 -

conveyor belt may be guided to travel upwardly towards the sealing roller.

A transverse sealing roller as defined above may also be located towards the end of the operative run of the conveyor belt.

In order to enhance the sealing effect at this sealing roller, the belt may be guided to travel downwardly away from the sealing roller.

The resilient periphery of the or each sealing roller being adapted to pass into the apertures in the belt to effect a seal between the roller and the conveyor belt and filter cloth combination.

The conveyor belt may comprise an open grid-like or mesh-like structure which is flexible transversely.

The filter cloth may comprise a separate endless filter belt located round the conveyor belt, the filter belt being adapted to lie on the upper outer face of the conveyor belt along its operative run

- 9 -

and to separate from the conveyor belt along its return run.

Preferably, the filter cloth is attached to the conveyor belt along the operative and return runs of the conveyor belt and is movable longitudinally with the conveyor belt along substantially the same closed path.

The inlet into the vacuum chamber may extend over at least a major portion of the width of the conveyor belt and filter cloth thereon. With this arrangement, filtrate may pass directly through apertures in the conveyor belt from the filter cloth and into the vacuum chamber over at least a major portion of the conveyor belt along its operative run, thereby reducing hydraulic resistance to a minimum.

Any suitable guide and/or sealing means may be provided along the longitudinal edges of the conveyor belt and/or the filter cloth, at least along the operative run of the conveyor belt.

A pair of guide formations for the opposite, longitudinally extending edges of the conveyor belt may be provided along the operative run.

The guide formations may be made of any suitable material with a low coefficient of friction, such as a suitable synthetic resinous material.

The guide formations may be replaceable.

The guide formations may comprise a pair of transversely spaced and inwardly facing channel shaped formations in which the opposite edges of the conveyor belt are slidably locatable.

The opposite, longitudinal edge zones of the filter cloth may be unattached along the entire length of the conveyor belt, the unattached edges of the filter cloth being turned upwardly away from the conveyor belt along the operative run and located in sliding engagement with side formations which are mounted on the vacuum chamber in air tight relationship therewith.

- 11 -

With this arrangement an effective edge seal may be obtained when a solids/liquid feed material is located on the operative run of the belt/cloth combination, the feed material urging the upturned edges of the filter cloth into sealing engagement with the side formations so that no air can be drawn into the vacuum chamber except through the feed material on the filter cloth.

The side formations may be made from any suitable material having a low coefficient of friction. For example, the side formations may be made from a suitable synthetic resinous material.

The side formations may be replaceable.

Each side formation may include a replaceable lining on which an unattached edge of the filter cloth is slidable, the replaceable lining comprising a material having a low coefficient of friction.

For a clear understanding of the invention a

0020101

- 12 -

preferred embodiment will now be described, purely by way of example, with reference to the accompanying drawings in which:-

Figure 1 is a diagrammatic elevational view of a continuous vacuum belt filter according to the invention.

Figure 2 is a diagrammatic and fragmentary perspective view (with parts broken away) of the drive end of a conveyor belt-filter cloth combination according to the invention.

Figure 3 is a diagrammatic and fragmentary plan view of the conveyor belt of figure 2 illustrating in greater detail the construction thereof.

Figure 4 is a diagrammatic an fragmentary cross-sectional view of the belt filter on the line IV - IV in figure 1, illustrating one embodiment of guide means for the longitudinal edges of the conveyor belt on the vacuum chamber.

Figure 5    is a diagrammatic and fragmentary
            cross-sectional view to an enlarged scale
            of the belt filter of figure 1,
            illustrating an alternative embodiment of
            guide means for the longitudinal edges of
            the conveyor belt on the vacuum chamber.

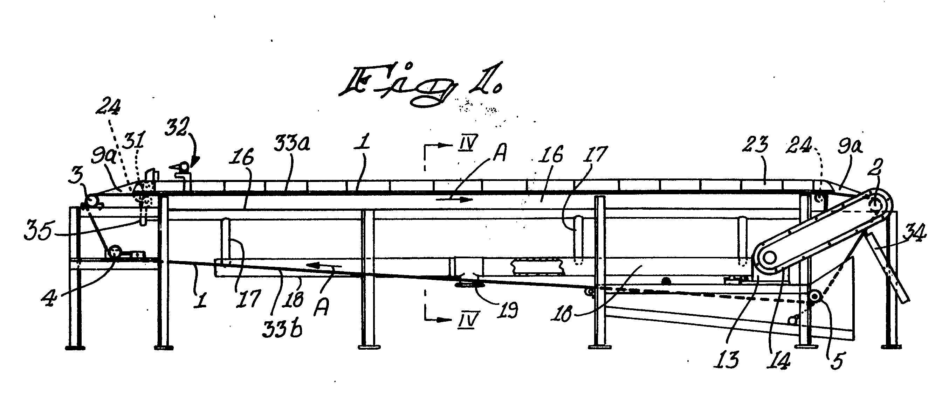

Figure 6    is a diagrammatic and fragmentary
            longitudinal vertical sectional view of
            the vacuum chamber of the belt filter of
            figure 1, illustrating transverse vacuum
            sealing arrangements at opposite ends of
            the vacuum chamber of the filter.

Figure 7    is a section on the line VII -VII in
            figure 6.

As shown in figure 1, the continuous vacuum belt
filter comprises endless conveyor belt 1 which is
mounted on a set of drive sprockets 2 and spaced
sets of idler sprockets 3, 4 and 5 for movement in the direction of arrows A along a closed path including an operative run 33a and a return run 33b.

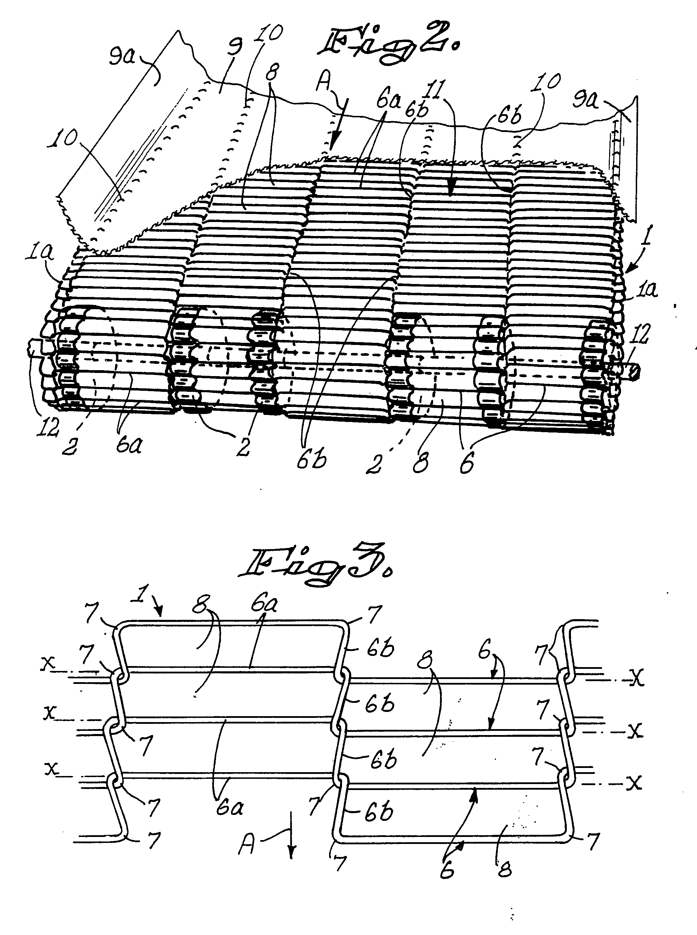

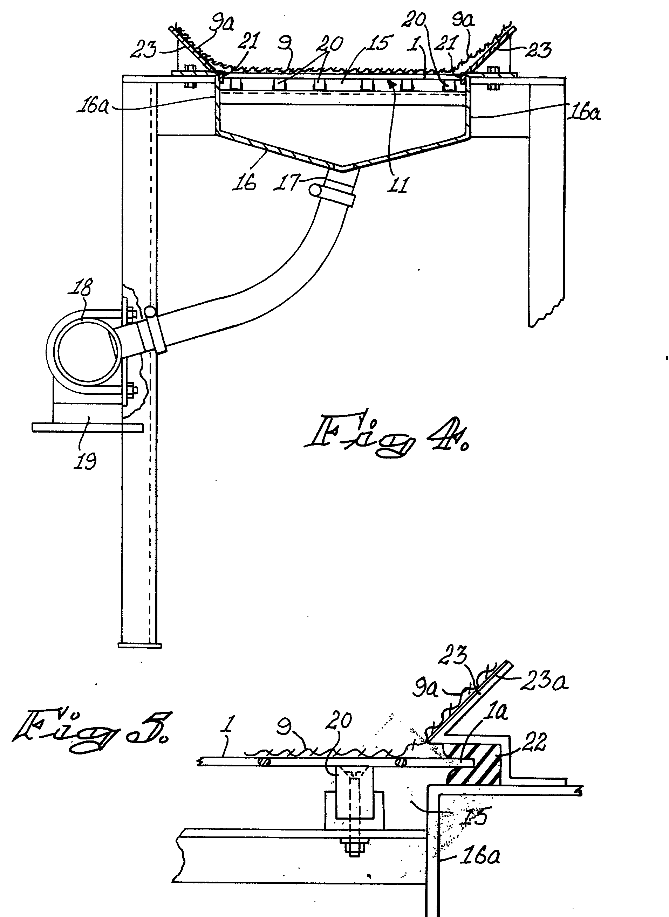

As shown in figures 2 and 3, conveyor belt 1 is of an open grid-like construction and comprises a plurality of elongate wire elements 6 each of which is bent back and forth in spaced zones 7 along its length as can best be seen in figure 3. The wire elements 6 are interlaced in pairs at bent zones 7 to define a grid-like structure with major portions 6a of the wire elements 6 extending transversely to the direction of travel of belt 1 as indicated by arrow A and minor portions 6b of the wire elements 6 extend along the direction of travel. Wire elements 6 are articulated at interlaced zones 7 to permit the grid-like structure to flex about axes X-X extending transversely to the direction of travel.

It will be appreciated that the articulated wire elements 6 define apertures 8 extending over a major portion of the surface area of belt 1.

- 15 -

A filter cloth 9 is located over the outer surface of the conveyor belt 1 along its entire length and width. Filter cloth 9 comprises any suitable flexible, liquid pervious filter material, such as woven cloth or synthetic fibre filter fabric. Filter cloth 9 is secured to the wire elements 6 in any suitable manner, such as by stitching 10, so that filter cloth 9 is attached to conveyor belt 1 along both the operative and return runs of the latter and is movable with conveyor belt 1 along the same closed path. The filter cloth 9 is attached to belt 1 in a longitudinally extending central zone 11 of the latter with the longitudinally extending edge zones 9a of the filter cloth 9 being left unattached as will be described in greater detail below.

Continuous wire belt 1, together with filter cloth 9 is driven in the direction of arrow A along the operative run 33a of belt 1 by means of a plurality of transversely spaced drive sprockets 2 drivingly mounted on transverse drive shaft 12. The teeth of sprockets 2 are of such a size and shape and are so spaced that they can engage in successive apertures 8 located along the length of belt 1 between successive major portions 6a of wire elements 6. A direct positive drive of belt 1 can be obtained. Drive shaft 12 is rotatably driven from motor 13 via chain drive 14.

As can be seen in figure 2, sprockets 2 are located adjacent to the minor portions 6b of wire elements 6 so that positive tracking of the belt/cloth combination 1, 9 can be achieved without ancillary belt and cloth tracking mechanisms being required. The minor portions 6b of wire elements 6 which comprise longitudinally disposed portions of the surrounds of the rows of apertures 8 which extend longitudinally along belt 1, constitute longitudinally extending guide formations adapted to co-operate with drive sprockets 2 to inhibit lateral movement of the wire belt 1. Since filter cloth 9 is attached to wire belt 1, separate tracking of filter cloth 9 is not required.

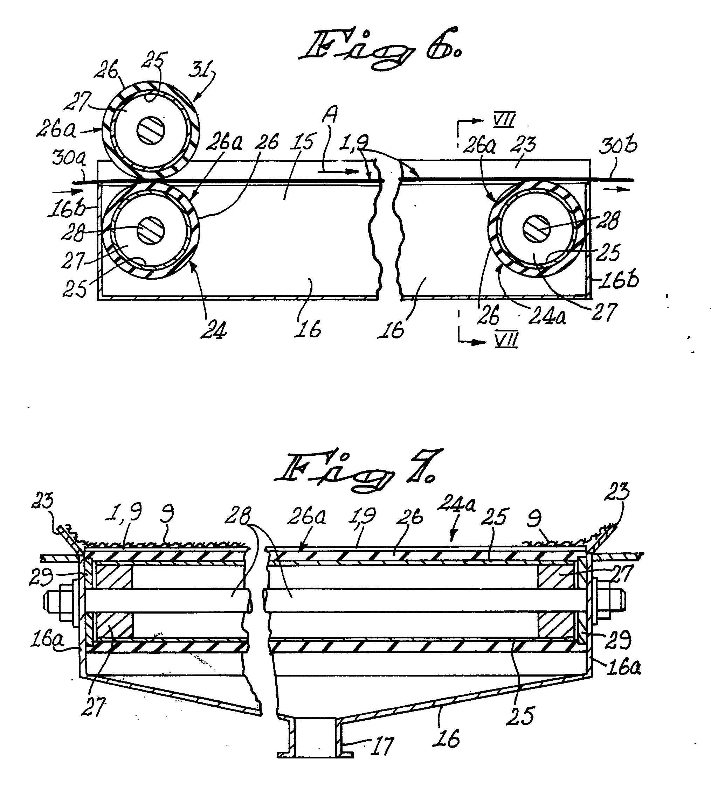

As can be seen in figure 4, the operative run of the belt/cloth combination 1, 9 is located over the elongate inlet 15 in the top of vacuum chamber 16 which extends along the operative run. Vacuum chamber 16 is provided with a plurality of bottom outlets 17 which are connected to outlet manifold 18 which in turn is provided with outlet coupling 19 for connection to a vacuum pump (not shown).

It will be seen that the cross-sectional width of vacuum chamber 16 and also of its inlet 15 is substantially the same as that of wire belt 1.

A plurality of transversely spaced elongate runner elements 20 extending longitudinally along vacuum chamber 16 and belt 1, are provided in vacuum chamber 16 to support belt 1 and filter cloth 9 in order to prevent them from sagging downwardly into chamber 16.

As shown in figure 4, a pair of elongate, replaceable wear strips 21 of suitable material with a low coefficient of friction, are removably mounted on the longtudinally extending side walls 16a of vacuum chamber 16 along opposite sides of inlet 15 into vacuum chamber 16 in positions adjacent the opposite longitudinally extending side edges 1a of belt 1. Wear strips 21 not only act to protect side walls 16a of vacuum chamber 16 from wear by wire belt 1, but also as guides for the opposide edges 1a of belt 1.

In the alternative arrangement shown in figure 5, a pair of inwardly facing, channel shaped and elongate guide formations 22 which are made of any suitable material with a low coefficient of friction, are removably mounted along opposite sides of the inlet 15 into vacuum chamber 16. The opposite, longitudinally extending side edges 1a of belt 1 are slidably located in guide formations 22 along the operative run of belt 1.

As stated above, the opposite, longitudinally extending side edges 9a of filter cloth 9 are not attached to belt 1 and along the operative run these side edges 9a are turned upwardly away from belt 1 and are located in sliding engagement with inclined side formations 23 which are mounted on vacuum chamber 16 in air-tight relationship therewith, on opposite sides of its inlet 15 as shown in figures 4 and 5. The side formations 23 may be made of a material having a low coefficient of friction (figure 4) or may be provided with a replaceable lining 23a which is made of material having a low coefficient of friction as shown in figure 5.

When a solids/liquid feed material (not shown) is located on the operative run of the belt/cloth combination 1, 9 the feed material urges the upturned edges 9a of filter cloth 9 into sealing engagement with side formations 23, so that when a vacuum is drawn in chamber 16 by means of the vacuum pump, no air can be drawn into vacuum chamber 16 except through the feed material on the filter cloth. An effective vacuum seal can thus be obtained between vacuum chamber 16 and the belt/cloth combination 1, 9 along the longitudinal side edges of the belt/cloth combination.

As shown in figure 1, feed means 32 is provided above filter cloth 9 in a position down stream of the feed end 35 of vacuum chamber 16 for the continuous supply of a solids-liquid feed material onto filter cloth 9 as the latter continuously moves past feed means 32.

As shown in figures 6 and 7, transverse end sealing is provided by means of sealing rollers 24, 24a which are located transversely to the direction of travel of belt 1 within vacuum chamber 16 at opposite ends of the inlet 15 into vacuum chamber 16. Each roller 24, 24a comprises a rigid tube 25 which is embraced by an outer sleeve 26 of closed cell, resilient foam rubber or like material with a smooth and continuous external peripheral surface 26a. A pair of bushes 27 of high density synthetic resinous material are located tightly in tube 25 at opposite ends thereof for rotation therewith and are rotatably mounted on a spindle 28 which is mounted between the side walls 16a of vacuum chamber 16 at the appropriate end thereof.

As can be seen in figure 7, the length of rigid tube 25 is less than the width of vacuum chamber 16 measured between the longitudinally disposed inner faces of its side walls 16a, whereas resilient sleeve 26 has a length greater than the width of vacuum chamber 16. A washer 29 of polytetrafluoroethylene having a low coefficient of friction is located round spindle 28 against the inner face of each side wall 16a. The ends of resilient sleeve 26 bear against washers 29 and against the inner faces of vacuum chamber side walls 16a and are rotatable relative thereto. There is a clearance between the ends of rigid tube 25 and washers 29, but due to its length resilient sleeve 26 is compressed longitudinally so that the outer ends of resilient sleeve 26 are biassed outwardly into sealing engagement with washers 29 and the inner faces of vacuum chamber side walls 16a. An effective vacuum seal can thus be obtained between the ends of rollers 24, 24a and the side walls 16a of vacuum chamber 16.

Rollers 24, 24a are located so that in their upper zones, the outer periphery 26a of the resilient sleeve 26 of each of rollers 24, 24a is located slightly above the level at which wire belt 1 is supported so that the material of the resilient sleeve 26 is urged against wire elements 6 of belt 1 and into the apertures 8 between wire elements 6 of belt 1. An effective seal can thus be obtained between rollers 24, 24a and the belt/cloth combination 1, 9 across opposite ends of vacuum chamber 16.

Spindle 28 of sealing rollers 24 and 24a are located relative to the end walls 16b of vacuum chamber 16 so that the peripheral surfaces 26a of the rollers are pressed into sealing engagement with the transversely disposed inner faces of end walls 16b. An effective seal can thus be obtained between rollers 24, 24a and vacuum chamber end walls 16b at opposite ends of vacuum chamber 16.

To enhance the sealing effect between rollers 24, 24a and the belt/cloth combination 1, 9 belt 1 may be guided to travel upwardly towards roller 24 from a position slightly below the upper region of roller 24 along the approach 30a towards the feed end 35 of vacuum chamber 16 and to travel downwardly away from roller 24a to a position slightly below the upper region of roller 24a along the departing run 30b away from vacuum chamber 16, as shown in figure 6. The need for adequate sealing is most critical at the feed end 35 of vacuum chamber 16 and to improve further the sealing effect between sealing roller 24 and the belt/cloth combination 1, 9 atthat end, pinch roller 31 of similar construction as sealing rollers 24 and 24a may be provided above the belt/cloth combination 1, 9 to urge the latter into the resilient periphery of sealing roller 24.

In use, during continuous longitudinal movement of the belt/cloth combination 1, 9 relative to vacuum chamber 16, a solids-liquid feed material is fed continuously onto the operative run 33a of filter cloth 9 by feed means 32 located in a position near the feed end 35 of vacuum chamber 16. Suction is applied to outlets 17 from vacuum chamber 16 by means of the vacuum pump which is connected to outlet coupling 19. Filtrate is drawn from the feed material through filter cloth 9, directly through the apertures 8 in belt 1 over substantially the whole of the width of belt 1 and through the wide

0020101

- 24 -

inlet 15 into vacuum chamber 16 from where it is withdrawn by the vacuum pump. A precipitate is retained on filter cloth 9 along operative run 33a and forms a filter cake (not shown) which is carried along and discharged from the continuously moving filter cloth 9. Scraper 34 may be provided to dislodge the filter cake. Liquid sprays (not shown) may be provided in suitable positions along return run 33b for washing the filter cloth 9.

Filter cloth 9 does not separate from belt 1 along the return run of the belt but the open grid-like construction of wire belt 1 permits effective washing of filter cloth 9 along the return run 33b.

With the invention a simple yet effective arrangement may be provided with which the problems encountered with conventional vacuum belt filters may be overcome or at least minimised.

It will be appreciated that many variations in detail are possible without departing from the scope of the appended claims.

- 1 -

CLAIMS:

1. A vacuum belt filter including an endless conveyor belt which includes apertures therethrough along its length and which is movable along a closed path including an operative run and a return run; filter cloth adapted to be located round the conveyor belt; a vacuum chamber below the operative run of the conveyor belt and including an inlet extending along at least part of the operative run of the conveyor belt, apertures through the conveyor belt which pass along the vacuum chamber during operation being located in registration with the inlet; and vacuum sealing means between the conveyor belt and the vacuum chamber, characterised in that the conveyor belt includes apertures therethrough over at least a major portion of its surface area; and the vacuum sealing means includes a sealing roller which is located transversely to the direction of travel of the conveyor belt towards an end of the inlet into the vacuum chamber in a position below the conveyor belt, at least the outer peripheral portion of the sealing roller comprising resilient material, the periphery of the sealing roller being in sealing contact with the conveyer belt and with a transversely disposed end face on the vacuum chamber and opposite ends of the resilient outer portion of the sealing roller being in sealing contact with opposed longitudinally disposed side faces on the vacuum chamber.

2. A vacuum belt filter as claimed in claim 1, characterised in that the resilient outer peripheral portion of the sealing roller is located in longitudinally compressed condition between the opposed side faces on the vacuum chamber.

3. A vacuum belt filter as claimed in claim 2, characterised in that the sealing roller comprises a rigid internal portion having a length less than the distance between the opposed side faces on the vacuum chamber; and an outer sleeve of resilient material embracing the rigid internal portion and having a length greater than the distance between the opposed side faces, the resilient outer sleeve being located in longitudinally compressed condition between the opposed side faces and also in peripheral contact with the conveyor belt and with the transverse end face on the vacuum chamber.

4. A vacuum belt filter as claimed in any one of claims 1 to 3, characterised in that the conveyor belt and the filter cloth thereon are compressed between the sealing roller and a pinch roller.

5. A vacuum belt filter as claimed in any one of claims 1 to 4, characterised in that the transverse sealing roller is located towards the start of the operative run of the conveyor belt.

6. A vacuum belt filter as claimed in claim 5, characterised by a pinch roller located transversely to the direction of travel of the conveyor belt in a position above the conveyor belt and the filter cloth thereon, the pinch roller acting to urge the conveyor belt into engagement with the resilient periphery of the sealing roller.

7. A vacuum belt filter as claimed in claim 5 or 6, characterised in that the conveyor belt is guided to travel upwardly towards the sealing roller.

8. A vacuum belt filter as claimed in claim 4 or 6, characterised in that the pinch roller is similar in construction to the sealing roller.

9. A vacuum belt filter as claimed in any one of claims 5 to 7, characterised by a

- 5 -

further sealing roller as defined in any one of claims 1 to 3 which is located towards the end of the operative run of the conveyor belt.

10. A vacuum belt filter as claimed in claim 9, characterised in that the belt is guided to travel downwardly away from the further sealing roller.

11. A vacuum belt filter as claimed in any one of the preceding claims, characterised in that the resilient periphery of the or each sealing roller is adapted to pass into the apertures in the belt to effect a seal between the roller and the conveyor belt and filter cloth.

12. A vacuum belt filter as claimed in any one of the preceding claims, characterised in that the conveyor belt comprises an open grid-like or mesh-like structure.

- 6 -

13. A vacuum belt filter as claimed in any one of the preceding claims, characterised in that the filter cloth is attached to the conveyor belt along the operative and return runs of the conveyor belt and is movable longitudinally with the conveyor belt along substantially the same closed path.

14. A vacuum belt filter as claimed in any one of the preceding claims, characterised in that the inlet into the vacuum chamber extends over at least a major portion of the width of the conveyor belt and the filter cloth thereon.

15. A vacuum belt filter as claimed in any one of the preceding claims, characterised in that the opposite, longitudinal edge zones of the filter cloth is unattached along the entire length of the conveyor belt, the unattached edges of the filter cloth being turned upwardly away from the conveyor belt along the operative run and located in sliding engagement with side formations which are mounted on the vacuum chamber in air tight relationship therewith.

16.  A vacuum belt filter as claimed in any one of the preceding claims, characterised in that   at least in part the opposed side faces on the vacuum chamber comprise material having a low coefficient of friction.

17.  A sealing roller as defined in any one of claims 1 to 3.

Fig. 1.

Fig 2.

Fig 3.

Fig 4.

Fig 5.

**Fig 6.**

**Fig 7.**

| Category | DOCUMENTS CONSIDERED TO BE RELEVANT | | CLASSIFICATION OF THE APPLICATION (Int. Cl. 3) |
|---|---|---|---|
| | Citation of document with indication, where appropriate, of relevant passages | Relevant to claim | |
| | FR - A - 1 316 395 (BAYERISCHE BERGHUTTEN UND SALZWERKE AG) <br><br> * Page 3, left-hand column; figures * | 1,4,6, 8,9, 12,13 | B 01 D 33/04 <br> 29/02 |
| | DE - C - 502 672 (BUCKAU WOLF) <br><br> * Page 2, lines 22-40; figures * | 1,5,7, 9,10, 14 | |
| | JP - A - 52 1570 (SUSUMO OZAWA) <br><br> * Abstract; figures 1,3,4 * | 1 | TECHNICAL FIELDS SEARCHED (Int.Cl. 3) <br><br> B 01 D 29/02 <br> 33/00 <br> 33/02 <br> 33/04 <br> 33/32 <br> 33/34 |
| A | US - A - 4 137 169 (EL HINDI) | | |
| A | US - A - 2 030 538 (RICHARDSON) | | |

CATEGORY OF CITED DOCUMENTS

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 20.08.1980 | HILD |

EPO Form 1503.1 06.78